# EUROPÄISCHE PATENTSCHRIFT

(11) **EP 2 363 377 B1**
(45) Veröffentlichungstag und Bekanntmachung des Hinweises auf die Patenterteilung: **03.12.2014**
(21) Anmeldenummer: 10154670.3
(22) Anmeldetag: 25.02.2010
(51) Int. Cl.: C01B 31/22, F25D 3/12

(54) **Vorrichtung zum Erzeugen von Kohlendioxid-Schnee**
Device for creating carbon dioxide snow
Dispositif de production de neige carbonique

(43) Veröffentlichungstag der Anmeldung: 07.09.2011
(73) Patentinhaber: Messer France S.A.S., 92816 Puteaux Cedex (FR)
(72) Erfinder: Frère, Émilian, 77100 Meaux (FR)
(74) Vertreter: Münzel, Joachim R.

(56) Entgegenhaltungen:
- EP-A1- 1 188 715
- GB-A- 294 584
- US-A- 4 415 346

## Beschreibung

Die Erfindung betrifft eine Vorrichtung zum Erzeugen von Kohlendioxidschnee, mit einer in einem Schneehorn aufgenommenen Entspannungsdüse zum Entspannen von flüssigem Kohlendioxid. Die Erfindung betrifft ferner ein Verfahren zum Kühlen von Produkten mit Kohlendioxidschnee.

In Schneehörnern erfolgt die Erzeugung von Kohlendioxidschnee durch Entspannen von flüssigem Kohlendioxid unter Ausnutzung des Joule-Thomson-Effekts. Das Schneehorn umfasst dabei ein Entspannungsorgan in Form einer Düse, die kopfseitig in einen senkrecht angeordneten Trichter angeordnet ist. Unter Druck stehendes, flüssiges Kohlendioxid wird an der Entspannungsdüse auf einen niedrigeren Druck entspannt, wobei ein Gemisch aus Kohlendioxidgas und Kohlendioxidschnee entsteht. Der Kohlendioxidschnee fällt im Trichter unter der Wirkung der Schwerkraft in einen Behälter oder auf eine zu behandelnde (insbesondere zu kühlende) Oberfläche hinab. Beim Einsatz derartiger Schneehörner führt jedoch der starke Strom des bei der Entspannung erzeugten Kohlendioxidgases zu einer Verwirbelung der leichten Schneepartikel und damit zu einer breiten Streuung der Schneepartikel vor der Mündungsöffnung des Schneehorns. Versucht man, die Schneeteilchen mit Hilfe mechanischer Einrichtungen, wie etwa Trichter oder Leitbleche, stärker zu fokussieren, besteht die Gefahr, dass der Kohlendioxidschnee an den mechanischen Einrichtungen anbackt und den Betrieb der Einrichtung insgesamt beeinträchtigt.

Nach der Lehre des US-Patents 4 111 362 B1 ist dieses Anbacken auf den heftigen Aufprall der Schneepartikel auf die Wände des Schneehorns zurückzuführen. Zur Lösung dieses Problems wird in dieser Druckschrift vorgeschlagen, zwei quer zur Richtung der Schneeausgabe aus dem Schneehorn ausgetragene, aus einem Schnee-Gas-Gemisch bestehende Strahlen in einem Winkel von 180° aufeinander zu richten, so dass der elastische Rückprall der auftreffenden Strahlen die kinetische Energie der Gas- und Schneepartikel weitgehend vernichtet. Der einwandfreie Betrieb des Schneeerzeugungssystems hängt dabei jedoch von einer sehr genauen Ausrichtung der Düsen ab, weil bereits eine geringfügige Abweichung von der exakten Antiparallelität der beiden Strahlen den vorteilhaften Effekt dramatisch verringert.

In der EP 0 385 851 B1 wird daher vorgeschlagen, keine linearen Schnee-Gas-Gemisch-Strahlen gegeneinander zu richten, sondern zwei entgegengesetzt gerichtete Spiralströme zu bilden, die in einer Y-förmigen Entspannungskammer jeweils an den beiden oberen Enden des "Y" eingetragen werden. Bei der Vereinigung der beiden Spiralströme löschen sich die Rotationskomponenten der Bewegung aus, und die miteinander vermischten Schneeströme fallen weitgehend unter der Wirkung der Schwerkraft mit verhältnismäßig geringer Geschwindigkeit durch einen Ausgabekanal hindurch auf eine zu behandelnde Oberfläche. Dieses System ist weitaus weniger empfindlich gegenüber fehlerhaften Justierungen der Entspannungsdüsen als die vorgenannten Einrichtung, gleichwohl jedoch noch verbesserungsbedürftig.

Die EP 1 188 715 A1 beschreibt eine Vorrichtung zum Erzeugen von Kohlendioxidschnee, gemäß dem Oberbegriff des Anspruchs 1.

In der US 4 415 346 A und der GB 294 584 A werden ebenfalls Vorrichtungen zum Erzeugen von Kohlendioxidschnee durch Entspannen von flüssigem Kohlendioxid beschrieben, bei dem der erzeugte Kohlendioxidschnee mittels Prallflächen vom gleichfalls erzeugten Kohlendioxidgas getrennt und über eine Ausleitung weitgehend drucklos einer weiteren Verarbeitung zugeführt wird.

Aufgabe der vorliegenden Erfindung ist, eine alternative Möglichkeit zur Erzeugung von Kohlendioxidschnee aus flüssigem Kohlendioxid anzugeben, bei dem eine starke Verwirbelung und Streuung der CO₂-Schneeteilchen durch das bei der Entspannung des flüssigen Kohlendioxids erzeugte Kohlendioxidgas weiter minimiert wird.

Gelöst ist diese Aufgabe durch eine Vorrichtung mit den Merkmalen des Patentanspruchs 1.

Eine erfindungsgemäße Vorrichtung zum Erzeugen von Kohlendioxidschnee ist also mit einer in einem Schneehorn aufgenommenen Entspannungsdüse zum Entspannen von flüssigem Kohlendioxid ausgerüstet, wobei das Schneehorn sowie eine Gasableitung zum Abführen des bei der Entspannung des flüssigen Kohlendioxids erzeugten gasförmigen Kohlendioxids in eine Trennkammer einmünden. Innerhalb der Trennkammer sind Prallflächen vorgesehen, an denen das aus dem Schneehorn strömende Gemisch aus Kohlendioxidschnee und Kohlendioxidgas (im Folgenden: Schnee-Gas-Gemisch) getrennt wird. Bei diesen Prallflächen handelt es sich beispielsweise um innerhalb der Trennkammer angeordnete separate Flächen und/oder um Teile der Wände der Trennkammer selbst. Der weit überwiegende Teil des Schnee-Gas-Gemisch-Stroms prallt dabei zunächst gegen die Prallflächen und wird bevorzugt mehrfach an den Wänden der Trennkammer reflektiert. Dadurch sammelt sich der Schnee innerhalb der Trennkammer, während der Gasstrom zumindest überwiegend über die Gasableitung entweicht und einer anderweitigen Verwertung zugeführt werden kann. Der Kohlendioxidschnee wird anschließend zumindest überwiegend drucklos mittels einer - bevorzugt mechanischen - Transporteinrichtung einer Mündungsöffnung der Trennkammer zugeführt, die beabstandet von der Gasableitung angeordnet ist. Die Ströme von Kohlendioxidgas und Kohlendioxidschnee werden also zuverlässig voneinander getrennt. Der Kohlendioxidgasstrom ist am Transport der Kohlendioxid-Schneepartikel nicht oder nur unwesentlich beteiligt. Die Gasableitung kann weiterhin mit einem Sieb oder Filter ausgerüstet sein, um sicher zu stellen, dass möglichst wenige Schneepartikel vom Kohlendioxidgasstrom mitgerissen und über die Gasableitung aus der Trennkammer ausgetragen werden.

Die Erfindung sieht weiterhin vor, dass die Transporteinrichtung eine Förderspirale oder Förderschnecke umfasst. Bevorzugt ist die Förderspirale (offen) oder die Förderschnecke (geschlossen) so innerhalb der Trennkammer aufgenommen, dass an den Wänden der Trennkammer anhaftender Schnee bei der Betätigung der Förderschnecke bzw. Förderspirale abgetragen und ebenfalls zur Mündungsöffnung der Trennkammer transportiert wird. Hierzu ist beispielsweise die Trennkammer zumindest abschnittsweise als zylinderförmiges Rohr ausgebildet, in dem zentral die Förderschnecke bzw. Förderspirale derart aufgenommen ist, dass die Außenkanten des Gewindes der Förderschnecke bzw. der Förderspirale bis unmittelbar an die Innenwand des rohrförmigen Abschnitts der Trennkammer reichen.

Bei den in der Trennkammer vorgesehenen Prallflächen handelt es sich um Teile der Förderspirale bzw. der Förderschnecke selbst, beispielsweise Teile des Schnecken- bzw. Spiralgewindes oder der Schneckenwelle. Die vom Schneehorn ausgehenden Kohlendioxidpartikel lagern sich in diesem Fall also im Bereich der Förderschnecke an und werden von dieser zur Mündungsöffnung der Trennkammer ausgetragen, während das Kohlendioxidgas über die Gasableitung entweicht.

Bevorzugt münden das Schneehorn und die Gasableitung in einem Winkel von 60° bis 120°, bevorzugt ungefähr 90° zueinander in die Trennkammer ein. Dies gewährleistet, dass der Strom des im Schneehorn erzeugten Schnee-GasGemisches keine wesentliche Richtungskomponente in Richtung der Achse der Gasableitung aufweist.

Zweckmäßigerweise ist das Schneehorn dabei im Wesentlichen senkrecht, mit der Entspannungsdüse im - geodätisch gesehen - oberen Bereich des Schneehorns angeordnet, um zu gewährleisten, dass der erzeugte Kohlendioxidschnee unter der Wirkung der Schwerkraft direkt in die Trennkammer hineinfällt.

Eine gleichfalls bevorzugte Ausgestaltung der Erfindung sieht vor, dass das Schneehorn und/oder die Gasableitung in einem Winkel von 60° bis 120°, bevorzugt ungefähr 90°, gegenüber der Transportrichtung des Kohlendioxidschnees in der Trennkammer angeordnet ist; der Strom des im Schneehorn erzeugten Gasgemisches weist in diesem Fall keine wesentliche Komponente in Richtung des Weitertransports der Schneepartikel auf, was für die zuverlässige Trennung von Gas und Schnee von Vorteil ist.

Alternativ zu einer ungefähr senkrechten oder spitzwinkligen Anordnung der Gasableitung gegenüber der Transportrichtung des Kohlendioxidschnees sieht eine wieder andere Ausgestaltung der erfindungsgemäßen Vorrichtung vor, dass die die Gasableitung und die Transporteinrichtung derart zueinender angestellt sind, dass die überwiegende Richtung des durch die Gasableitung entweichenden Gasstroms und die überwiegende Transportrichtung des mittels der Transporteinrichtung zur Mündungsöffnung der Trennkammer geführten Kohlendioxidschnees in einem Winkel von etwa 180° zueinander verlaufen, d.h. Gasableitung und Mündungsöffnung liegen ungefähr auf einer Achse, sind jedoch einander gegenüberliegend an der Trennkammer angeordnet. Auch auf diese Weise lassen sich die Ströme von Kohlendioxidgas und Kohlendioxidschnee gut voneinander trennen.

Zweckmäßigerweise umfasst die erfindungsgemäße Vorrichtung eine mit der Entspannungsdüse und/oder der Transporteinrichtung datenverbundene Steuereinrichtung, die die Menge an zugeführtem flüssigem Kohlendioxid und/oder die Vortriebsgeschwindigkeit der Transporteinrichtung reguliert. Mittels der Steuereinrichtung kann die Menge des erzeugten und über die Transporteinrichtung geförderten Kohlendioxidschnees entsprechend vorgegebenen Werten oder nach einem vorgegebenem Programm genau bestimmt bzw. geregelt werden.

Die Aufgabe der Erfindung wird auch durch ein Verfahren zum Kühlen von Produkten mit Kohlendioxidschnee gelöst, bei dem in einem Schneehorn durch Entspannen von flüssigem Kohlendioxid ein Gemisch aus Kohlendioxidgas und Kohlendioxidschnee erzeugt und der erzeugte Kohlendioxidschnee auf die Oberfläche eines Produkts aufgetragen wird, wobei das Gemisch aus Kohlendioxidschnee und Kohlendioxidgas einer Trennkammer zugeführt und in der Trennkammer an Prallflächen zumindest weitgehend getrennt wird, wobei das abgetrennte Kohlendioxidgas zumindest teilweise über eine Gasableitung abgeführt und der Kohlendioxidschnee mittels einer Transporteinrichtung zumindest weitgehend drucklos einer Mündungsöffnung der Trennkammer zugeführt und auf die Oberfläche der Produkte aufgetragen wird, und das dadurch gekennzeichnet ist, dass als Transporteinrichtung eine Förderspirale oder eine Förderschnecke zum Einsatz kommt, von der Teile zugleich als Prallfläche eingesetzt werden.

Im Gegensatz zu Kühlverfahren nach dem Stande der Technik, bei dem flüssiges Kohlendioxid entspannt und der dabei erzeugte Kohlendioxidschnee in einem Schneehorn im Strom des zugleich erzeugten Kohlendioxidgases unmittelbar auf die Produkte ausgetragen wird, erfolgt die Zuführung nach dem erfindungsgemäßen Verfahren somit indirekt, unter Zwischenschaltung einer Trennkammer, in der das Gemisch von Kohlendioxidgas und Kohlendioxidschnee durch Reflexion an Prallwänden getrennt wird, und einer Transporteinrichtung, mittels der der Kohlendioxidschnee zumindest weitgehend drucklos gefördert und somit anschließend zumindest weitgehend ohne störende Einflüsse des Kohlendioxidgases auf die zu kühlenden Produkte aufgetragen werden kann. Um einen zumindest weitgehend drucklosen Transport des Kohlendioxidschnees sicher zu stellen, also einen Transport ohne Überdruck gegenüber der umgebenden Atmosphäre oder nur mit einem - im Vergleich zum Druck des bei der Entspannung des flüssigen Kohlendioxids entstehenden Kohlendioxidgases - geringen Überdruck, erfolgt der Transport bevorzugt mittels einer mechanischen Transporteinrichtung, etwa einer Förderschnecke oder einer Förderspirale. Gleichwohl erzeugt das anwesende Kohlendioxidgas eine inerte Atmosphäre innerhalb der Trennkammer und einen geringen Überdruck, der während des Transports des Kohlendoxidschnees durch die Trennkammer das Eindringen von Feuchtigkeit aus der umgebenden Atmosphäre verhindert.

Anhand der Zeichnungen soll ein Ausführungsbeispiel der Erfindung näher erläutert werden. In schematischer Ansicht zeigen:

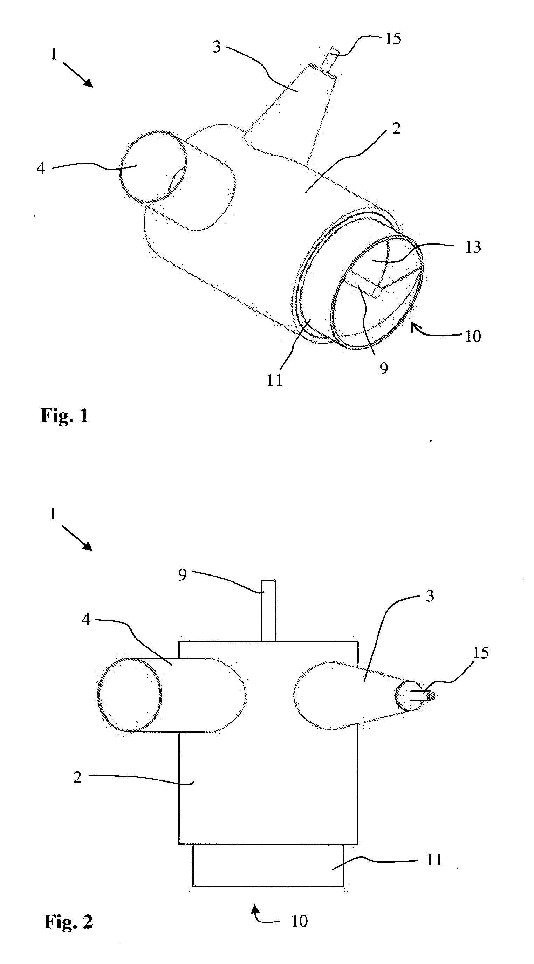

Fig. 1: Eine erfindungsgemäße Vorrichtung in einer Schrägansicht,
Fig. 2: Die Vorrichtung aus Fig. 1 in einer Draufsicht,
Fig. 3: Die Vorrichtung aus Fig. 1 und 2 in einer Vorderansicht
Fig. 4: Die Vorrichtung aus Fig. 1 bis 3 in einer Schnittansicht entlang der Linie F-F aus Fig. 3.

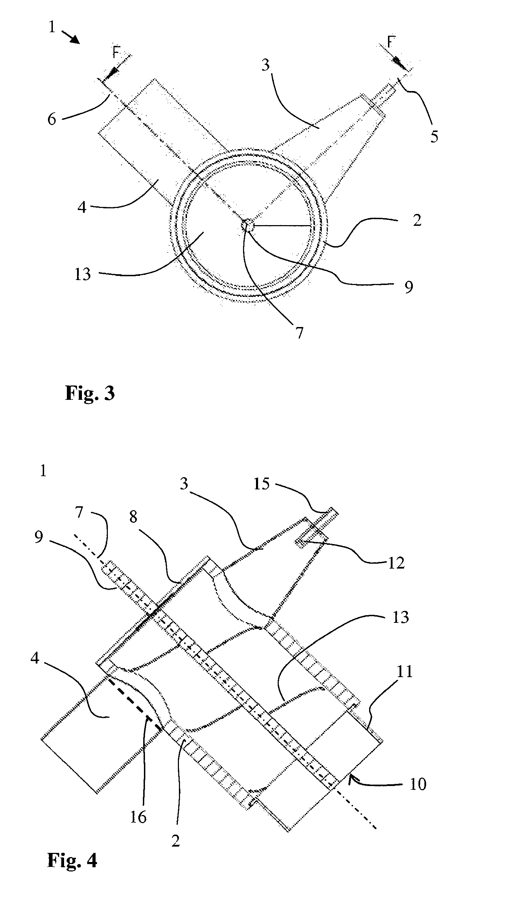

Die in den Zeichnungen gezeigte Vorrichtung 1 umfasst einen ungefähr rohrförmigen Zentralkörper 2, in den ein Schneehorn 3 sowie eine Gasableitung 4 einmünden. Das im Ausführungsbeispiel sich konisch zum Zentralkörper 2 sich weitende Schneehorn 3 und die im Ausführungsbeispiel rohrzylinderförmige Gasableitung 4 stehen mit ihren jeweiligen, in Fig. 3 gezeigten Achsen 5, 6 ungefähr senkrecht zueinander und gleichfalls senkrecht zur Längsachse 7 des Zentralkörpers 2. Auf seiner Rückseite 8 ist der Zentralkörper 2 mit einer - lediglich von einer drehbar gelagerten und in hier nicht gezeigter Weise mit einem Motor verbundenen Welle 9 durchbrochenen - Wand abgeschlossen. An seiner vorderseitigen Mündungsöffnung 10 weist der Zentralkörper ein fest, jedoch ablösbar angeordnetes Vorsatzteil 11 auf, das im Ausführungsbeispiel gleichfalls rohrzylinderförmig ausgeführt ist und dessen Innendurchmesser geringfügig geringer als der Innendurchmesser des Zentralkörpers 2 ist. Im Innern des Zentralkörpers 2 erstreckt sich eine Förderschnecke 13, die mit der Welle 9 verbunden ist und die durch Drehen der Welle 9 in Rotation versetzt werden kann. Das Schneehorn 3 weist an seiner vom Zentralkörper 2 entgegen gesetzten Kopfseite eine Entspannungsdüse 12 für flüssiges Kohlendioxid auf. Bevorzugt ist die Vorrichtung 1 so im Raum angeordnet, dass das Schneehorn 3 im Wesentlichen vertikal angeordnet ist, wobei sich die Entspannungsdüse 12 im geodätischen Sinne oben befindet. Die Gasableitung 4 ist in hier nicht gezeigter Weise mit einer Abführleitung verbunden, die die weitere Verwertung des gasförmigen Kohlendioxids ermöglicht. Beispielsweise kann das gasförmige Kohlendioxid verflüssigt und anschließend wieder der Entspannungsdüse 12 zugeführt werden.

Beim Einsatz der Vorrichtung 1 wird flüssiges Kohlendioxid über eine hier nicht gezeigte, an einen Anschlussstutzen 15 der Entspannungsdüse 12 angeschlossene Kohledioxidleitung herangeführt und an der Entspannungsdüse 12 entspannt. Der dabei entstehende Strom aus Kohlendioxidschnee und Kohlendioxidgas (Schnee-Gas-Strom) wird durch das Schneehorn 3 hindurch in das Innere des Zentralkörpers 2 eingetragen. Der Schnee-Gas-Strom stößt an die Innenwände des Zentralkörpers 2 und an Flächen der Förderschnecke 13, also am Schneckengewinde und an der Schneckenwelle an. Diese Flächen wirken somit als Prallflächen, an denen sich zumindest ein Teil des Kohlendioxidschnees ansammelt, während der Strom des Kohledioxidgases zumindest ganz überwiegend in Richtung der Gasableitung 4 entweicht. Der Zentralkörper 2 bildet auf diese Weise eine Trennkammer, in der Kohlendioxidgas und Kohlendioxidschnee zumindest teilweise voneinander getrennt werden. Der im Zentralkörper angesammelte Kohlendioxidschnee wird mit Hilfe der Förderschnecke 13 in Richtung auf die Mündungsöffnung 10 gefördert und fällt am Vorsatzteil 11 in hier nicht gezeigter Weise auf ein zu kühlendes Produkt oder in einen Behälter hinein. Um die Ausbeute an Kohlendioxidschnee weiter zu erhöhen, ist innerhalb der Gasableitung ein Trennsieb 16 angeordnet, und zwar bevorzugt derart, dass Kohlendioxidschnee, der sich auf der zum Zentralkörper 2 hin weisenden Seite des Trennsiebs 16 anlagert, vom Gewinde der Förderschnecke 13 bei deren Drehung abgetragen wird.

Die Vorrichtung 1 ermöglicht die kontinuierliche Produktion von Kohlendioxidschnee, der weitgehend drucklos und ohne Verwirbelungen durch den bei der Entspannung entstehenden Kohlendioxid-Gasstrom aus der Mündungsöffnung 10 des Zentralkörpers lediglich unter der Wirkung der Schwerkraft herausfällt. Zugleich findet der Transport des Kohlendioxidschnees durch den Zentralkörper in einer zumindest überwiegend aus Kohlendioxid bestehenden Atmosphäre statt. Die Förderung des Kohlendioxidschnees kann durch Variation der Umdrehungsgeschwindigkeit der Förderschnecke 13 beeinflusst werden. Ebenso kann die Menge des erzeugten Kohlendioxidschnees durch Veränderung des Drucks oder der Menge des der Entspannungsdüse 12 zugeführten flüssigen Kohlendioxids eingestellt oder geregelt werden. Eine hier nicht gezeigte Steuerung, die mit dem Motor der Welle 9 und/oder einem dem Anschlussstutzen 15 vorgeschalteten Ventil verbunden ist, ermöglicht die entsprechende Einstellung bzw. Regelung in Abhängigkeit vorgegebener oder gemessener Parameter.

Die im Ausführungsbeispiel nur wenige Windungen aufweisende Förderschnecke 13 kann in ihrer Länge fast beliebig variiert werden, sofern eine entsprechende thermische Isolierung des Zentralkörpers 2 den Transport des Kohlendioxidschnees erlaubt, ohne dass dieser weitgehend sublimiert. Ebenso muss nicht notwendigerweise eine starre Förderschnecke 13 zum Einsatz kommen, ebenso gut kann beispielsweise eine flexible Förderspirale in einem gekrümmten Zentralkörper eingesetzt werden Vorstellbar sind auch andere mechanische Vortriebssysteme, wie beispielsweise Transportbänder. Weiterhin können auch mehrere Schneehörner und/oder Gasableitungen, die jeweils in unterschiedlichen Winkel oder axialen Abständen am Zentralkörper angeordnet sind, zum Einsatz kommen.

Die erfindungsgemäße Einrichtung kommt beispielsweise in Kühltunneln anstelle konventioneller Schneehörner zum Einsatz und ermöglicht dort, dass der Kohlendioxidschnee sehr viel zielgerichteter auf die zu kühlenden Produkte ausgetragen werden kann, als dies beim Stand der Technik möglich ist. Eine Andere vorteilhafte Anwendung liegt in der Befüllung eines Transport-, Kühl- oder Speicherbehälters mit Trockeneisschnee: Da der Kohlendioxidschnee zumindest weitgehend nicht durch den Kohlendioxidgasstrom verwirbelt und von diesem mitgerissen wird, können die zur Aufnahme des Trockeneisschnees bestimmten Behälter mit niedrigeren Wänden ausgerüstet sein und/oder kann auf aufwändige Einrichtungen verzichtet werden, mit denen die Schneepartikel im Behälter zurückgehalten werden sollen.

### Bezugszeichenliste

- 1.: Vorrichtung
- 2.: Zentralkörper
- 3.: Schneehorn
- 4.: Gasableitung
- 5.: Achse (des Schneehorns)
- 6.: Achse (der Gasableitung)
- 7.: Längsachse (des Zentralkörpers)
- 8.: Rückseite (des Zentralkörpers)
- 9.: Welle
- 10.: Mündungsöffnung (des Zentralkörpers)
- 11.: Vorsatzteil
- 12.: Entspannungsdüse
- 13.: Förderschnecke
- 14.: -
- 15.: Anschlussstutzen
- 16.: Trennsieb

## Patentansprüche

1. Vorrichtung zum Erzeugen von Kohlendioxidschnee, mit einer in einem Schneehorn (3) aufgenommenen Entspannungsdüse (12) zum Entspannen von flüssigem Kohlendioxid, wobei das Schneehorn (3) sowie eine Gasableitung (4) zum Abführen des bei der Entspannung des flüssigen Kohlendioxids erzeugten gasförmigen Kohlendioxids in eine Trennkammer (2) einmünden, in der eine Prallfläche zum Trennen des beim Entspannen des flüssigen Kohlendioxids erzeugten Kohlendioxidschnees vom Kohlendioxidgas sowie eine Transporteinrichtung (13) zum Transportieren des Kohlendoxidschnees zu einer von der Gasableitung (4) beabstandeten Mündungsöffnung (10) der Trennkammer (2) vorgesehen ist, **dadurch gekennzeichnet, dass** als Transporteinrichtung eine Förderspirale oder Förderschnecke (13) zum Einsatz kommt und als Prallflächen Teile der Förderspirale bzw. der Förderschnecke (13) zum Einsatz kommen.

2. Vorrichtung nach Anspruch 1, **dadurch gekennzeichnet, dass** das Schneehorn (3) und die Gasableitung (4) in einem Winkel zwischen 60° und 120°, bevorzugt ungefähr 90° zueinander in die Trennkammer (2) einmünden.

3. Vorrichtung nach Anspruch 1 oder 2, **dadurch gekennzeichnet, dass** das Schneehorn (3) und/oder die Gasableitung (4) zwischen 60° und 120°, bevorzugt ungefähr 90° gegenüber der Transportrichtung des Kohlendioxidschnees durch die Trennkammer (2) einmünden.

4. Vorrichtung nach einem der vorhergehenden Ansprüche, **dadurch gekennzeichnet, dass** die die Gasableitung (4) und die Transporteinrichtung (13) derart zueinender angeordnet sind, dass die überwiegende Richtung des durch die Gasableitung (4) entweichenden Gasstroms und die überwiegende Transportrichtung des mittels der Transporteinrichtung (13) zur Mündungsöffnung (10) der Trennkammer (2) geführten Kohlendioxidschnees in einem Winkel von etwa 180° zueinander stehen.

5. Vorrichtung nach einem der vorhergehenden Ansprüche, **gekennzeichnet durch** eine mit der Entspannungsdüse (12) und/oder der Transporteinrichtung (13) datenverbundene Steuereinrichtung zum Regulieren der Menge an zugeführtem flüssigen Kohlendioxid und/oder der Vortriebsgeschwindigkeit der Transporteinrichtung (13).

6. Verfahren zum Kühlen von Produkten mit Kohlendioxidschnee, bei dem in einem Schneehorn (3) durch Entspannen von flüssigem Kohlendioxid ein Gemisch aus Kohlendioxidgas und Kohlendioxidschnee erzeugt und der erzeugte Kohlendioxidschnee auf die Oberfläche eines Produkts aufgetragen wird, wobei das Gemisch aus Kohlendioxidschnee und Kohlendioxidgas einer Trennkammer (2) zugeführt und in der Trennkammer (2) an Prallflächen zumindest weitgehend getrennt wird, wobei das abgetrennte Kohlendioxidgas zumindest teilweise über eine Gasableitung (4) abgeführt und der Kohlendioxidschnee mittels einer Transporteinrichtung (13) zumindest weitgehend drucklos einer Mündungsöffnung (10) der Trennkammer (2) zugeführt und auf die Oberfläche der Produkte aufgetragen wird,
**dadurch gekennzeichnet,**
**dass** als Transporteinrichtung eine Förderspirale oder eine Förderschnecke zum Einsatz kommt, von der Teile zugleich als Prallfläche eingesetzt werden.

## Claims

1. Device for generating carbon dioxide snow, with an expansion nozzle (12), accommodated in a snow horn (3), for the expansion of liquid carbon dioxide, the snow horn (3) and a gas discharge line (4) for discharging the gaseous carbon dioxide, generated during the expansion of the liquid carbon dioxide, issuing into a separating chamber (2) in which are provided an impact surface for separating the carbon dioxide snow generated during the expansion of the liquid carbon dioxide from the carbon dioxide gas and also a transport device (13) for transporting the carbon dioxide snow to an issue orifice (10), spaced apart from the gas discharge line (4), of the separating chamber (2), **characterized in that** a conveying helix or conveying worm (13) is used as a transport device and parts of the conveying helix or of the conveying worm (13) are used as impact surfaces.

2. Device according to Claim 1, **characterized in that** the snow horn (3) and the gas discharge line (4) issue into the separating chamber (2) at an angle of between 60° and 120°, preferably at approximately 90°, to one another.

3. Device according to Claim 1 or 2, **characterized in that** the snow horn (3) and/or the gas discharge line (4) issue at between 60° and 120° preferably at approximately 90°, with respect to the direction of transport of the carbon dioxide snow through the separating chamber (2).

4. Device according to one of the preceding claims, **characterized in that** the gas discharge line (4) and the transport device (13) are arranged with respect to one another in such a way that the predominant direction of the gas stream escaping through gas discharge line (4) and the predominant direction of transport of the carbon dioxide snow led by means of the transport device (13) to the issue orifice (10) of the separating chamber (2) are at an angle of approximately 180° to one another.

5. Device according to one of the preceding claims, **characterized by** a control device, data-connected to the expansion nozzle (12) and/or to the transport device (13), for regulating the quantity of liquid carbon dioxide delivered and/or the propulsive speed of the transport device (13).

6. Method for the cooling of products by means of carbon dioxide snow, in which a mixture of carbon dioxide gas and of carbon dioxide snow is generated in a snow horn (3) as a result of the expansion of liquid carbon dioxide, and the carbon dioxide snow generated is applied to the surface of a product, the mixture of carbon dioxide snow and of carbon dioxide gas being delivered to a separating chamber (2) and being at least partially separated at impact surfaces in the separating chamber (2), the separted carbon dioxide gas being discharged at least partially via a gas discharge line (4), and the carbon dioxide snow being delivered, at least largely pressureless, by means of a transport device (13) to an issue orifice (10) of the separating chamber (2) and being applied to the surface of the products, **characterized in that** the transport device used is a conveying helix or a conveying worm, parts of which are used at the same time as an impact surface.

## Revendications

1. Dispositif de formation de neige de dioxyde de carbone, le dispositif présentant une tuyère de détente (12) reprise dans une corne (3) à neige et détendant le dioxyde de carbone liquide, la corne (3) à neige ainsi qu'un conduit (4) de sortie de gaz servant à évacuer le dioxyde de carbone gazeux formé lors de la détente du dioxyde de carbone liquide débouchant dans une chambre de séparation (2) dans laquelle sont disposés une surface de percussion qui permet de séparer le dioxyde de carbone gazeux de la neige de dioxyde de carbone formée lors de la détente du dioxyde de carbone liquide ainsi qu'un dispositif de transport (13) qui transporte la neige de dioxyde de carbone vers une ouverture (10) débouchant dans la chambre de séparation (2) et située à distance du conduit (4) de sortie de gaz, **caractérisé en ce que** le dispositif de transport utilisé est une spirale de transport ou une vis de transport (13) et **en ce que** les surfaces de percussion utilisées sont des parties de la spirale de transport ou de la vis de transport (13).

2. Dispositif selon la revendication 1, **caractérisé en ce que** la corne (3) à neige et le conduit (4) de sortie de gaz débouchent dans la chambre de séparation (2) sous un angle mutuel compris entre 60° et 120° et de préférence d'environ 90°.

3. Dispositif selon les revendications 1 ou 2, **caractérisé en ce que** la corne (3) à neige et/ou le conduit (4) de sortie de gaz débouchent à un angle de 60° à 120° et de préférence d'environ 90° par rapport à la direction de transport de la neige de dioxyde de carbone dans la chambre de séparation (2).

4. Dispositif selon l'une des revendications précédentes, **caractérisé en ce que** le conduit (4) de sortie de gaz et le dispositif de transport (13) sont disposés l'un par rapport à l'autre de telle sorte que la direction dominante de l'écoulement de gaz qui s'échappe par le conduit (4) de sortie de gaz et la direction dominante de transport de la neige de dioxyde de carbone transportée au moyen du dispositif de transport (13) vers l'ouverture (10) qui découche dans la chambre de séparation (2) forment entre elles un angle d'environ 180°.

5. Dispositif selon l'une des revendications précédentes, **caractérisé par** un dispositif de commande relié à des données de la tuyère de détente (12) et/ou de la direction de transport (13) et destiné à réguler la quantité de dioxyde de carbone liquide apportée et/ou la vitesse d'avancement du dispositif de transport (13).

6. Procédé de refroidissement de produits à l'aide de neige de dioxyde de carbone, dans lequel un mélange de dioxyde de carbone gazeux et de neige de dioxyde de carbone est formé dans une corne (3) à neige par détente de dioxyde de carbone liquide, la neige de dioxyde de carbone ainsi formée étant appliquée sur la surface d'un produit, le mélange de neige de dioxyde de carbone et de dioxyde de carbone gazeux étant apporté dans un chambre de séparation (2) et étant au moins largement séparé sur des surfaces de percussion prévues dans la chambre de séparation (2), le dioxyde de carbone gazeux séparé étant évacué au moins en partie par un conduit (4) de sortie de gaz et la neige de dioxyde de carbone étant apportée au moins largement sans pression au moyen d'un dispositif de transport (13) à une ouverture (10) qui débouche dans la chambre de séparation (2) et étant appliquée sur la surface des produits,
**caractérisé en ce que**
le dispositif de transport utilisé et une spirale de transport ou une vis de transport dont des parties sont également utilisées comme surface de percussion.
